# EUROPEAN PATENT SPECIFICATION

(11) **EP 1 939 034 B1**
(45) Date of publication and mention of the grant of the patent: **13.04.2011**
(21) Application number: 07380386.8
(22) Date of filing: 27.12.2007
(51) Int. Cl.: B60N 2/70

(54) **Tension rod for the upholstery of automobile seats**
Spannstange für die Polsterung von Automobilsitzen
Tige de tension pour la garniture de sièges automobiles

(30) Priority: 28.12.2006 ES 200602802 U
(43) Date of publication of application: 02.07.2008
(73) Proprietor: Seat, S.A., 08760 Martorell, Barcelona (ES)
(72) Inventor: Alonso, Berrar c/o Seat, S.A., 08760 Martorell (Barcelona) (ES); Vizcaino Aloy, Oriol c/o Seat, S.A., 08760 Martorell (Barcelona) (ES); Marti Olle, Jaume c/o Seat, S.A., 08760 Martorell (Barcelona) (ES)
(74) Representative: Carvajal y Urquijo, Isabel

(56) References cited:
- EP-A2- 1 616 749
- US-A- 3 462 196
- US-A- 3 501 137
- US-A- 4 289 304

## Description

### Object of the Invention

The present invention relates to a tension rod for the upholstery of automobile seats, which rod is known in the field as a piano wire and forms a means for tightening the upholstery of the seats of automotive vehicles and preventing wrinkles from forming in the upholstery.

The object of the invention is to make assembling said piano wire rod possible and easier in those seats incorporating an auxiliary airplane-style table in their rear part.

### Background of the Invention

In automotive vehicles when the seat is new, the foam that forming said seat is flexible and sufficiently rigid in order to keep its original form. However over time said foam loses rigidity, which results in the inevitable formation of wrinkles and creases in the upholstery, these being undesired both on an aesthetic and ergonomic level.

To solve these problems the backrest of the seats is provided with an automatic tension and drawing system for the upholstery based on a piano wire tension rod, which is connected on the means formed by a bar which is incorporated on the framework provided in the backrest of the seat itself.

The coupling or connection bar of the piano wire tension rod is transversally fixed on the framework, the bar having a certain flexibility to be inserted into the framework and to hold the tension rod or piano wire, further allowing the use of one single size of the latter, which will be adjusted to any size or type of vehicle seat whatever the configuration is, which leads to standardizing seat covers.

Due to its special configuration, the mentioned bar fixed to the frame of the seat produces pressure on the elastically deformable foam body which is in contact with the cover, preventing wrinkles from forming.

The piano wire rod in turn has a closed loop with a singular configuration on one of its ends through which it is fixed to the bar, such that in order to carry out said fixing it is necessary to access the seat through the rear part thereof, carrying out the connection or joining of the rod on the bar and fixing it by means of clipping it in the suitable position.

Nevertheless in those vehicles incorporating an auxiliary airplane-style table in the rear part of the backrest it is impossible to access from the mentioned rear part to fix the piano wire rod since the assembly of said auxiliary table is carried out by means of a cross beam fixed in the rear part of the backrest, which prevents being able to assemble the piano wire rod through the rear part. Furthermore, as a consequence that the coupling loop is closed it is also impossible to assemble it from the front part.

US-A-3501137 discloses a upholstered spring for the back of a motor vehicle seat having connected thereto a spring upholstered section forming the head support while the spring in said back and the spring in said head support forming section, form a single spring unit with each other. The spring in the head support is directly connected to the spring in the back of the seat, so that any major rigid connecting elements or the like will be avoided.

EP 16 16 749 shows a tension rod with the features of the preamble of claim 1.

### Description of the Invention

The piano wire rod, or tension rod, that is proposed used in tightening the covers or upholsteries of the seats of automotive vehicles has some particularities that allow solving the drawbacks previously set forth, making the assembly thereof from the front part of the seat possible in those cases in which said seat incorporates the classic auxiliary rear table.

More specifically, the tension or piano wire rod object of the invention has the particularity that the coupling or fixing loop is open and has a special double "U" configuration with one of its lateral branches extended and doubly bent to establish a section which at its end half-encircles the rod itself in order to form the closure of the loop, although forming before its closure a configuration by way of a double hook that allows linking to the fixing bar from the front part of the seat, since it does not require having to carry out the final clipping which is carried out when conventional closed loop rods are used.

By means of this improvement incorporated on the tension or piano wire rod, time can be saved in its assembly since it can be assembled once the bar is fixed to the framework, in turn allowing the standardization of the product, since a single piano wire rod can be assembled in several different seat models.

Finally it can be said that the other end of the rod incorporates a double branch hook for anchoring it in an opening provided for that purpose in the inner-rear part of the seat itself.

### Description of the Drawings

To complement the description being made and for the purpose of aiding to better understand the features of the invention according to a preferred practical embodiment thereof, a set of drawings is attached as an integral part of said specification, in which the following has been shown with an illustrative and non-limiting character:

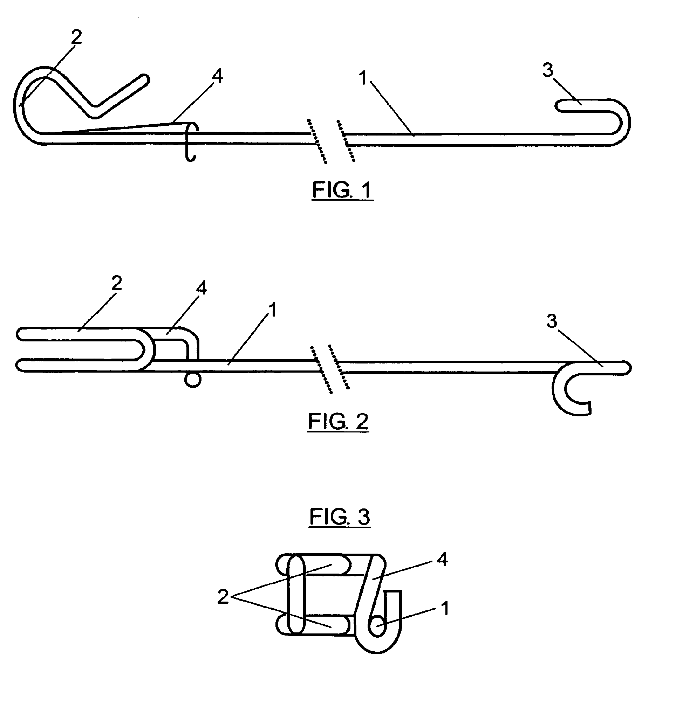

Figures 1, 2 and 3 show three views corresponding to a side elevational view, a plan view and a profile view of the tension rod object of the invention, allowing the particular open loop of one of the ends as well as the form of the hook defined on the opposite end to be seen.

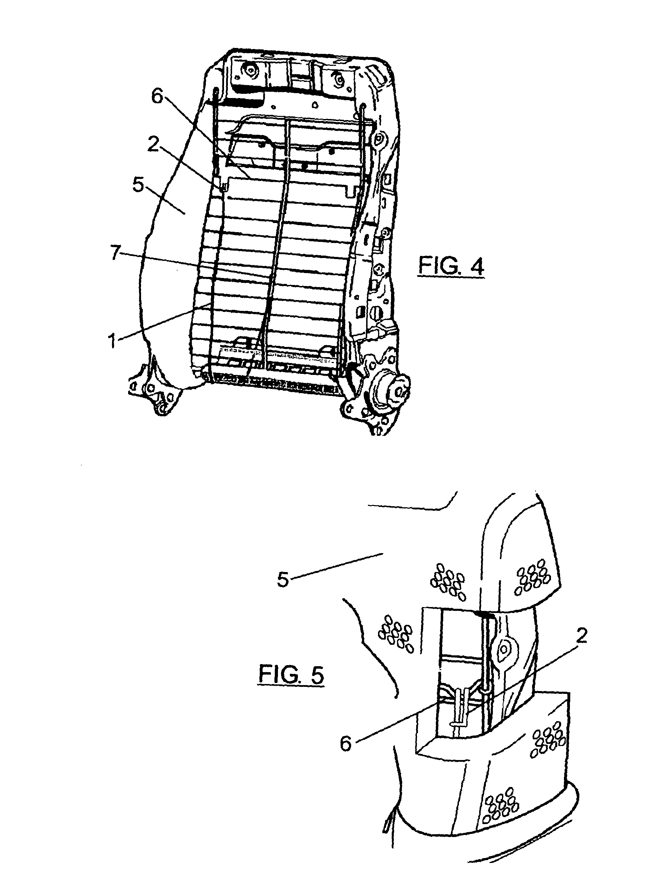

Figure 4 shows a rear view of a seat and more specifically of a seat backrest of an automotive vehicle with the tension rod duly assembled.
Figure 5 shows a detail of the upper front anchoring point of the tension rod to the corresponding crossbar.
Figure 6 shows a perspective view of the anchoring between the tension rod and the lower rear part of the seat.
Figure 7 finally shows an enlarged detail of the anchoring shown in the previous figure.

### Preferred Embodiment of the Invention

As can be seen in the mentioned figures, the tension rod or piano wire (1) object of the invention, has an open loop (2) on one of its ends and on the opposite end a hook (3), such that the open loop (2) is formed by a double "U" in which one of the side branches has an extension (4) that is doubly bent and forms a type of loop around the rod (1) itself, this open loop (2) with mentioned double "U" configuration thus closing on such rod- (1), the opposite end having the hook (3) formed by a double branch "U" folding.

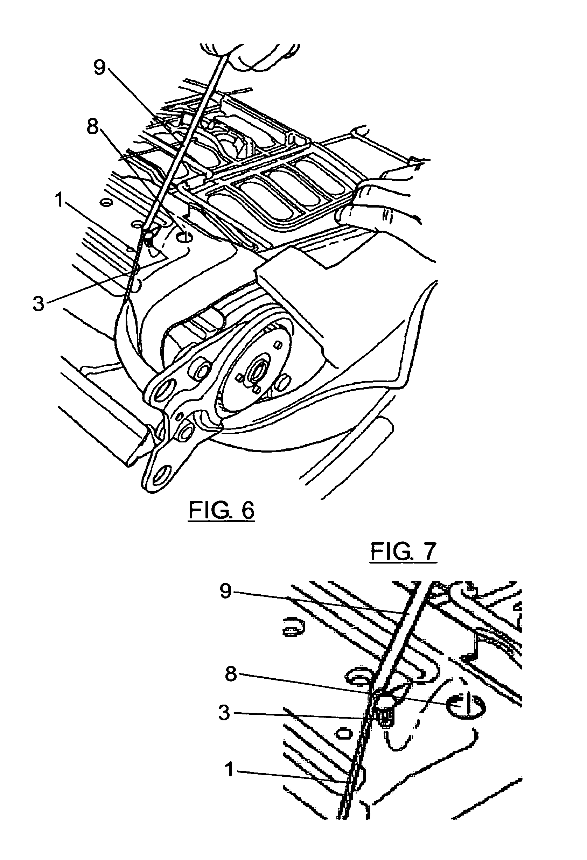

The application of the tension rod (1) in the seat backrest (5) is carried out by coupling, by means of the open loop (2) on a crossbar (6) fixed at its end on the corresponding framework (7) of the backrest of a seat (5) itself, all such that by virtue of the special configuration of that open loop (2), the tension rod (1) can be assembled from the front part of the backrest (5) in the event that the backrest has an auxiliary airplane-style table, since the coupling can be carried out, because the loop (2) is open, on the mentioned crossbar (6), and finally carrying out the anchoring of the end corresponding to the opposite hook (3) in an opening (8) provided for that purpose in the seat itself, using to that end a special tool, such as an elbow bar (9) as shown in Figure 6, which is pulled through the end hook (3) of the rod (1) to lead this rod to anchoring the hook (3) in the opening (8) of the seat.

Accordingly, on the basis of the tension rod or piano wire with the described open loop, it is possible to carry out the anchoring thereof by accessing it from the front part of the seat, thereby preventing having to access it from the rear part as is traditionally done and in the event that the backrest incorporates an auxiliary table in its rear part, it is impossible to carry out that anchoring from the rear part since conventional rods have a closed loop, making it impossible to carry out the coupling from through the rear part since the assembly crosspiece of the auxiliary table itself is located there, such that on the basis of the open loop (2) of the tension rod (1) of the invention, it is possible to carry out the anchoring by accessing it from the front part of the seat.

Finally it can be said that although the open loop (2) has a special configuration as has been described, it is geometrically simple and suitable in order to fulfill its function and be fixed in the suitable place of the bar (6) transversally fixed on the structure (7) of the backrest of the seat.

## Claims

1. A tension rod for the upholstery of automobile seats, known in the field as a piano wire rod (1), and provided to be fixed on a bar (6) transversally assembled on the framework (7) of the seat (5) itself, and being of the type that incorporates a connecting and fixing loop (2) on one of its ends for connecting and fixing it to said bar, **characterized in that** said loop (2) provided on one of the ends is open and has a double "U" configuration, defining a type of hook for connecting and fixing it directly on the bar with the particularity that one of the branches (4) of said open loop by way of a hook is extended with a double bend in order to define an end section which closes on the rod itself.

2. A tension rod for the upholstery of automobile seats according to claim 1, **characterized in that** on the end opposite to the end with the open loop of the rod, a double branch hook (3) has been provided to be anchored in an opening (8) provided for that purpose in the lower rear part of the seat.

## Patentansprüche

1. Spannstange für die Polsterung von Kraftfahrzeugsitzen, im Fachgebiet als Stahldraht (1) bekannt, und zum Befestigen an einem Stab (6) vorgesehen, der quer verlaufend am Rahmenwerk (7) des Sitzes (5) selbst vorgesehen ist, und von der Art, die eine Verbindungs- und Befestigungsschleife (2) an einem ihrer Enden zum Verbinden mit und Befestigen an dem Stab eingliedert, **dadurch gekennzeichnet, dass** die Schleife (2), die an einem der Enden vorgesehen ist, offen ist und eine doppelte "U"-Konfiguration aufweist, die eine Art eines Hakens zum direkten Verbinden mit und Befestigen an dem Stab mit der Besonderheit definiert, dass eine der Verzweigungen (4) der offenen Schleife als Haken mit einer doppelten Biegung verlängert ist, um einen Endteilabschnitt zu definieren, der auf dem Stab selbst schließt.

2. Spannstange für die Polsterung von Kraftfahrzeugsitzen nach Anspruch 1, **dadurch gekennzeichnet, dass** an dem Ende gegenüber dem Ende mit der offenen Schleife der Stange ein doppelter Verzweigungshaken (3) zur Verankerung in einer Öffnung (8) vorgesehen ist, die zu diesem Zweck im unteren rückwärtigen Teil des Sitzes vorgesehen ist.

## Revendications

1. Une tringle pour la garniture des sièges automobiles, connue dans le secteur sous le nom de fil de piano (1), pourvue pour être fixée à une barre (6) transversalement assemblée au châssis (7) du siège (5), étant du type qui incorpore une boucle d'assemblage et de fixation (2) à l'une de ses extrémités pour la raccorder et la fixer à cette barre, **caractérisée en ce que** cette boucle (2) pourvue à l'une de ses extrémités est ouverte et a une forme en double U, définissant ainsi une sorte de crochet pour la raccorder et la fixer directement sur la barre, avec la particularité que l'une des branches (4) de cette boucle ouverte en forme de crochet est prolongée par un double coude définissant ainsi une partie finale qui se referme sur la tringle.

2. Une tringle pour la garniture dès sièges automobiles selon la revendication 1, **caractérisée en ce qu'**à l'extrémité opposée à l'extrémité dotée de la boucle ouverte de la tringle, un crochet à double branche (3) a été pourvu pour être ancré dans une ouverture (8) pourvue à cet effet dans la partie arrière inférieure du siège.
